## Europäisches Patentamt

## European Patent Office

## Office européen des brevets

(19)

(11) Veröffentlichungsnummer: **0 009 541**
**A2**

(12) **EUROPÄISCHE PATENTANMELDUNG**

(21) Anmeldenummer: **79102265.0**

(22) Anmeldetag: **04.07.79**

(51) Int. Cl.³: **A 01 D 87/12**
**A 01 D 85/00, B 65 G 57/30**

(30) Priorität: **05.07.78 DE 2829460**
**05.12.78 DE 2829518**

(43) Veröffentlichungstag der Anmeldung:
**16.04.80 Patentblatt 80/8**

(84) Benannte Vertragsstaaten:
**BE FR GB IT NL SE**

(71) Anmelder: **Bollmann, sen., Heinrich**
**Woltwiescherstrasse 17**
**D-3201 Söhlde(DE)**

(71) Anmelder: **Bollmann, jun., Heinrich**
**Woltwiescherstrasse 17**
**D-3201 Söhlde(DE)**

(72) Erfinder: **Bollmann, sen., Heinrich**
**Woltwiescherstrasse 17**
**D-3201 Söhlde(DE)**

(72) Erfinder: **Bollmann, jun., Heinrich**
**Woltwiescherstrasse 17**
**D-3201 Söhlde(DE)**

(74) Vertreter: **Arendt, Helmut, Dipl.-Ing. et al,**
**Hubertusstrasse 2**
**D-3000 Hannover 1(DE)**

(54) **Sammelgerät für Ballen.**

(57) Das Sammeln, Herstellen von Verbundstapeln, Transportieren und Verladen von quaderförmigen Ballen aus Stroh und dergleichen erfordert einen hohen Arbeitsaufwand. Es sind zahlreiche Geräte bekannt, um hier Abhilfe zu schaffen. Die Geräte sind technisch kompliziert und erfordern zumindest beim Herstellen von Feldmieten oder für das Verladen mindestens eine Hilfskraft. Dieser Nachteil wird durch die Erfindung vermieden. Sie besteht aus einer an den Frontladerschwingungen befestigbaren gabelartigen Zange und Leitschienen zur Bildung von Sammelräumen mit Mitteln zum Bilden von Schichten aus wenigstens zwei in Fahrtrichtung längs nebeneinander und zum Verschwenken mindestens eines der eine Schicht bildenden Ballen quer zur Fahrtrichtung vor und/oder hinter den längs zur Fahrtrichtung nebeneinander liegenden Ballen.

./...

Fig 27

Fig. 28

PATENTANWÄLTE
DIPL.-ING. R. SCHOMERUS
DIPL.-ING. H. ARENDT
HUBERTUSSTR. 2 · TELEFON 66 30 71
3000 HANNOVER 1

0009541

Hannover, den 2. Juli 1979

Betr.: B 865/A/sch – Anmelder: Heinrich Bollmann sen.
Heinrich Bollmann jun.
Woltwiescherstr. 17
3201 Söhlde

---

" Sammelgerät für Strohballen udgl. "

BEZEICHNUNG GEÄNDERT
siehe Titelseite

Die Erfindung bezieht sich auf ein Gerät zum Sammeln,
Verbundstapeln, Transportieren und Verladen der von
einer fahrbaren Presse auf einem Feld erzeugten, etwa
quaderförmigen Ballen aus Stroh, Heu udgl.

Die von einer Ballenpresse erzeugten quaderförmigen
Ballen aus Stroh, Heu udgl. werden entweder auf dem
Feld abgesetzt oder durch eine Übergabevorrichtung,
beispielsweise Transportband, auf einen nachfolgenden
Anhänger gefördert. Auf dem Felde abgelegte Ballen werden allgemein mit an Treckern befestigten Frontladeeinrichtungen erfaßt und zusammengetragen bzw. auf einem Transportfahrzeug gestapelt. Die Ballen müssen hierbei von Arbeitskräften auf dem Verladefahrzeug von Hand
gepackt werden. Dabei werden Verbundschichten gebildet,
um sichere Stapel herzustellen, die beim Transport
nicht auseinanderfallen. Auch die von Förderbändern auf
einen nachgezogenen Anhänger geförderten Ballen müssen durch
Arbeitskräfte auf dem Anhänger sorgfältig zu Verbundschichten gestapelt werden.

- 2 -

Die vorgenannten Arbeiten erfordern den Einsatz von Arbeitskräften für das Packen der auf dem Transportfahrzeug zu bildenden Stapel. Das gleiche gilt für das Zusammensetzen von Feldrandmieten. Auch hier muß zumindest eine Arbeitskraft die durch ein Transportfahrzeug zugeführten Ballen zu Verbundschichten übereinanderstapeln.

Der Erfindung liegt die Aufgabe zugrunde, ein Gerät zu schaffen, mit welchem die von einer Ballenpresse ausgeworfenen Ballen zu Verbundschichten zusammengefügt und zu hohen Stapeln zusammengesetzt werden können, ohne daß hierfür zusätzliche Arbeitskräfte benötigt werden. Das gilt sowohl für eine Verladung auf einem Transportfahrzeug als auch für das Zusammensetzen von Stapeln zu einer Miete.

Die Erfindung zur Lösung dieser Aufgabe ist durch eine gabelartige Zange mit in Fahrtrichtung weisenden, quer verstellbaren Armen und Leitschienen zur Bildung von zwei Sammelräumen mit Mitteln zum Bilden stapelbarer Schichten aus wenigstens zwei in Fahrtrichtung nebeneinander und zum Verschwenken mindestens eines der eine Schicht bildenden Ballen quer zur Fahrtrichtung vor und/oder hinter den längs zur Fahrtrichtung nebeneinander liegenden Ballen gekennzeichnet.

Es besteht die Möglichkeit, die Leitschienen mit den Mitteln zum Bilden der stapelbaren Ballenschichten sowohl mit der Ballenpresse zu koppeln als auch mit den Zangenarmen zu verbinden.

Die durch die Erfindung erreichten Vorteile bestehen im wesentlichen darin, daß allein der Fahrer einer landwirtschaftlichen Zugmaschine in der Lage ist, die durch eine Ballenpresse erzeugten Ballen ohne abzusteigen zu Verbundschichten zusammenzufügen und diese Schichten zu hohen Stapeln aufeinanderzusetzen. Diese Stapel können sowohl auf einem Transportfahrzeug, beispielsweise einem landwirtschaftlichen Anhänger als auch auf dem Feld zu Feldmieten zusammengefügt werden. Ein weiterer Vorteil ist darin zu sehen, daß die unter Verwendung des erfindungsgemäßen Gerätes gebildeten Stapel wesentlicher schneller und genauer gesetzt werden können als durch menschliche Arbeitskraft.

Nachstehend wird die Erfindung anhand von zwei Ausführungsbeispielen dargestellt und erläutert, wobei die Einzelbeispiele konstruktive Varianten erkennen lassen. In der Zeichnung zeigen:

Fig. 1    eine Draufsicht auf eine Ausführungsform, bei der die Leitschienen mit der Zange verbunden sind,

Fig. 2    eine Rückansicht des Geräts gemäß Figur 1,

Fig. 3    die Seitenansicht der Zange mit der Fangvorrichtung,

Fig. 4    eine Draufsicht auf den Sammelteil des Gesamtgeräts,

Fig. 5    einen Querschnitt durch den starren Zangenarm,

Fig. 6    einen Querschnitt durch den verstellbaren Zangenarm,

Fig. 7    die Ansicht der Rastelemente für
          den Schwenkarm in der Abwicklung,

Fig. 8    das Ende der inneren Leitschiene,

Fig. 9    den Gegenstand gemäß Figur 8 in
          nach vorn geschwenkter Endlage,

Fig. 10   eine Draufsicht auf die Leitschienen
          in der zur Ankupplung an eine Ballenpresse geeigneten Form,

Fig. 11   ein Teilstück der Vorrichtung gemäß
          Figur 10,

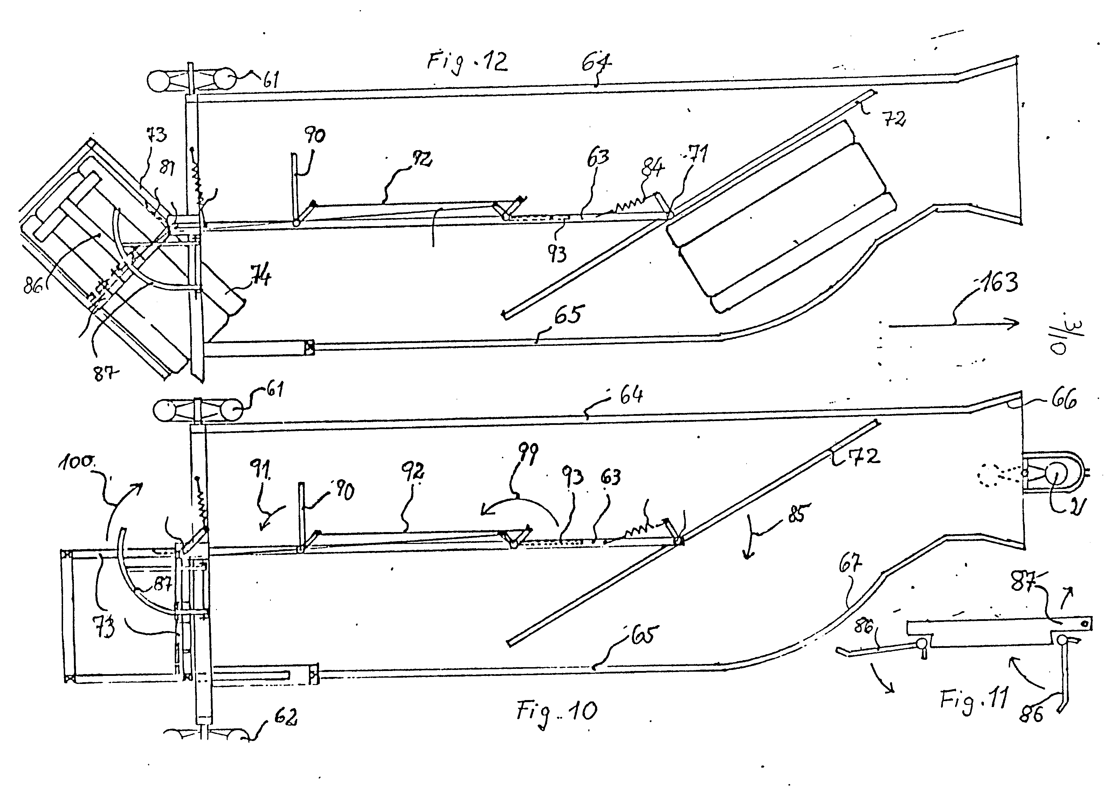

Fig. 12   eine Draufsicht auf die Leitschienen
          mit zwei Preßballen,

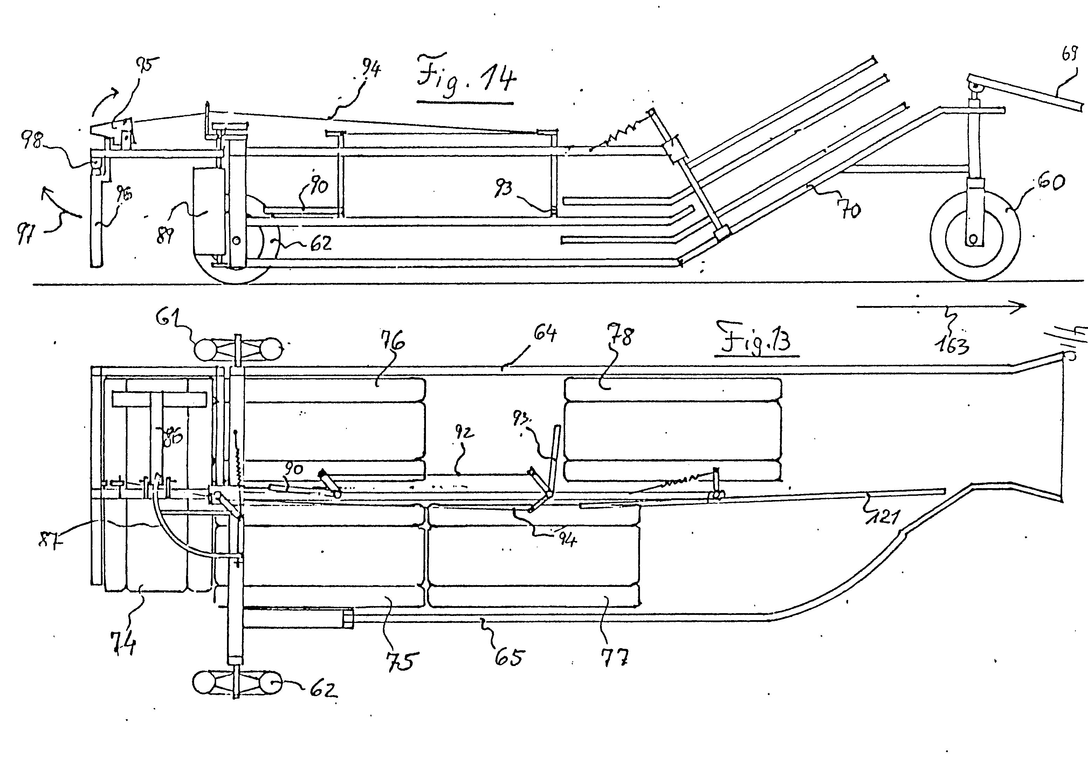

Fig. 13   eine Draufsicht auf die Leitschienen
          gemäß Figur 10 mit fünf Ballen, und
          zwar unmittelbar vor dem Auslösemoment
          zum Entleeren der Sammelräume,

Fig. 14   einen Längsschnitt durch das Gerät
          gemäß den Figuren 10 bis 13 in einer
          Ausführungsform, bei der der Ballen
          innerhalb des Gerätes durch Bodenkontakt ausgerichtet wird,

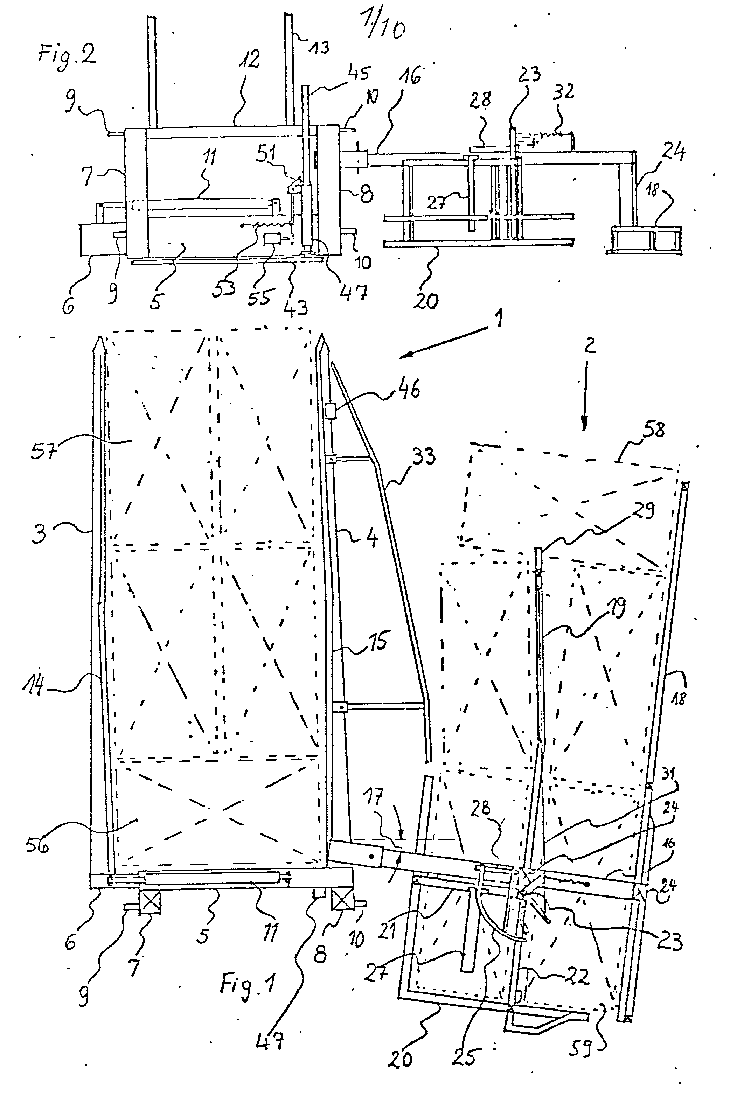

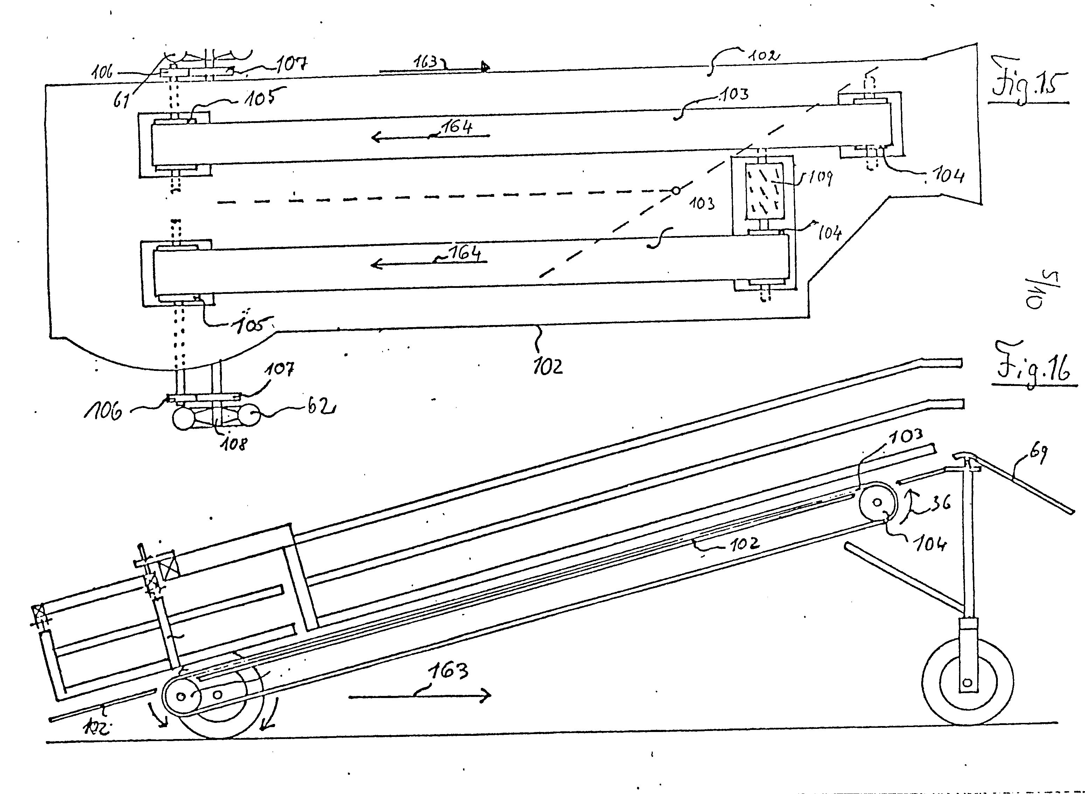

Fig. 15   eine Draufsicht auf eine Ausführungsform gemäß den Figuren 1 bis 13 mit

0009541

- 5 -

zusätzlich angeordneten Transportbändern zur Beförderung der Ballen
innerhalb der Leitschienen,

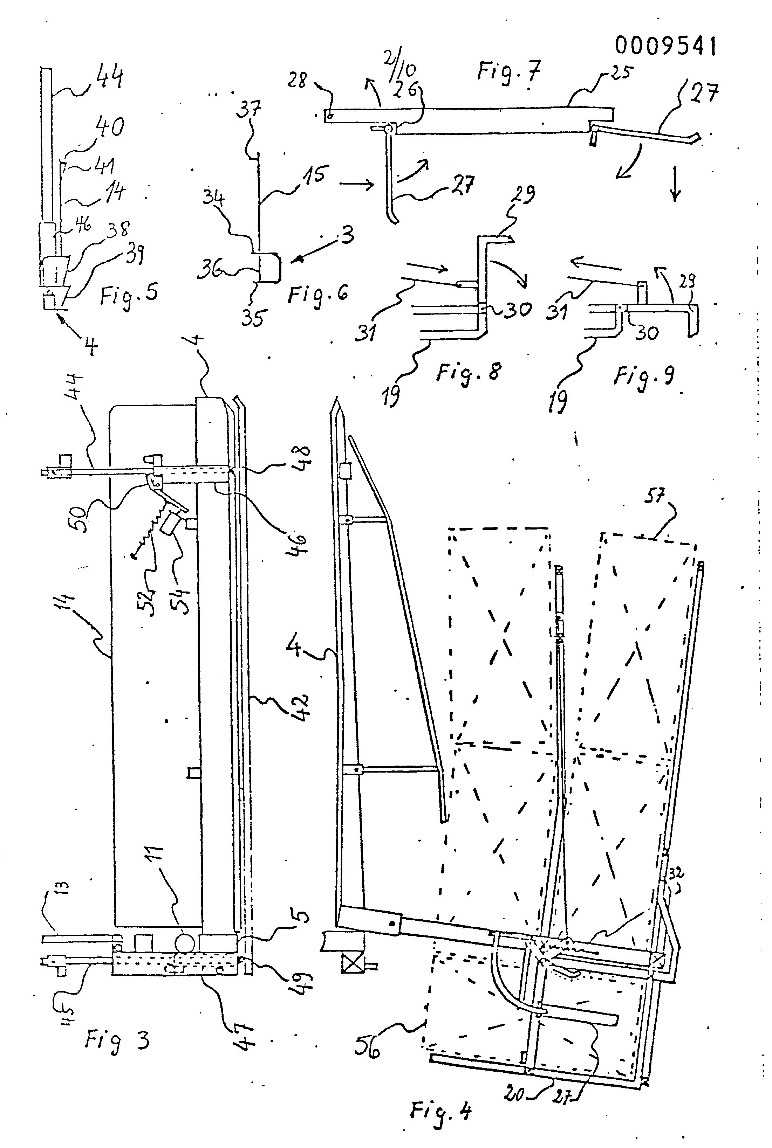

Fig. 16 die Seitenansicht des Gerätes in
alternativer Ausführung zu Fig. 5,

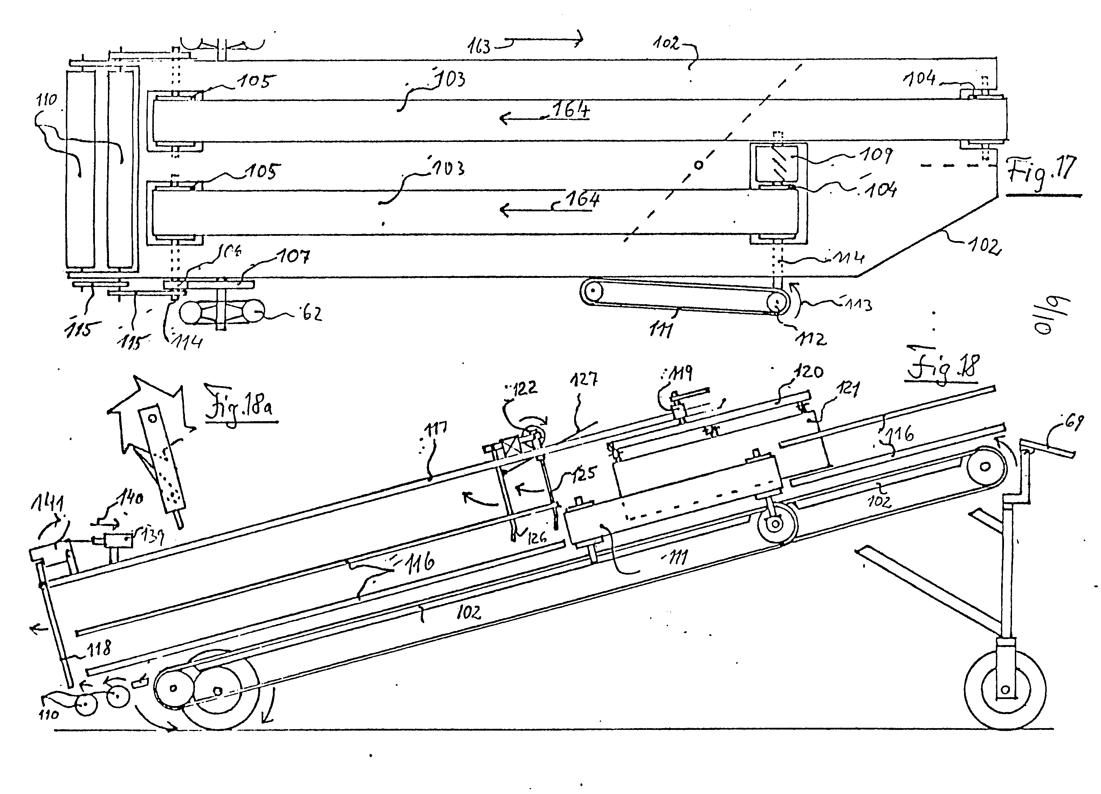

Fig. 17 eine Draufsicht auf die mit Förderbändern versehene Bodenplatte mit
der Querballen wechselseitig vor und/
oder hinter den längs zur Fahrrichtung
liegenden Ballen abgelegt werden können,

Fig. 18 eine Seitenansicht des Geräts gemäß
Fig. 17,

Fig. 18A ein Teilstück des in Figur 18 dargestellten Gerätes, und zwar ein Teil des
Schrittschaltwerkes.

Fig. 19 eine Draufsicht auf den in Fahrichtung vorderen Teil des Gerätes in der
Ausführung gemäß den Figuren 7 und 8,

Fig. 19A eine stirnseitige Ansicht einer Einzelheit des Gerätes in der Ausführung gem.
Figur 9,

Fig. 19B eine Seitenansicht der Einzelheit gem.
Figur 19A,

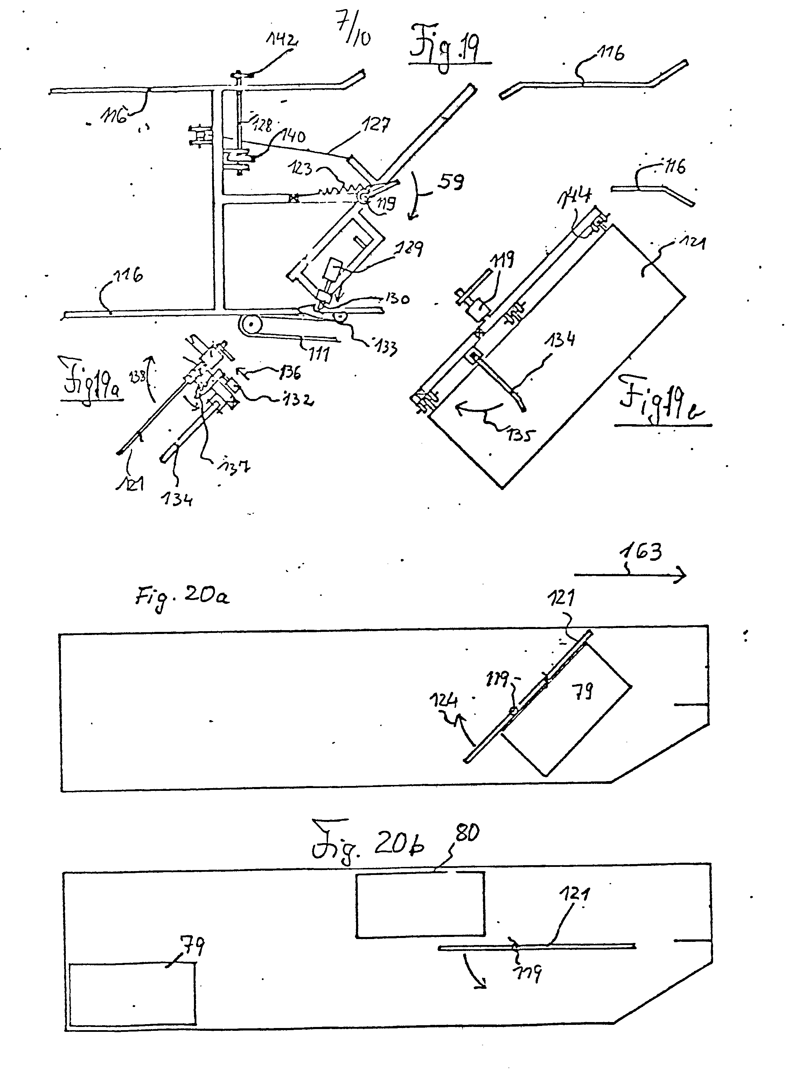

Fig. 20A eine schematische Darstellung der Ar-
bis 20E beitsweise eines Gerätes gemäß den Figuren 17 und 18,

- 6 -

0009541

- 6 -

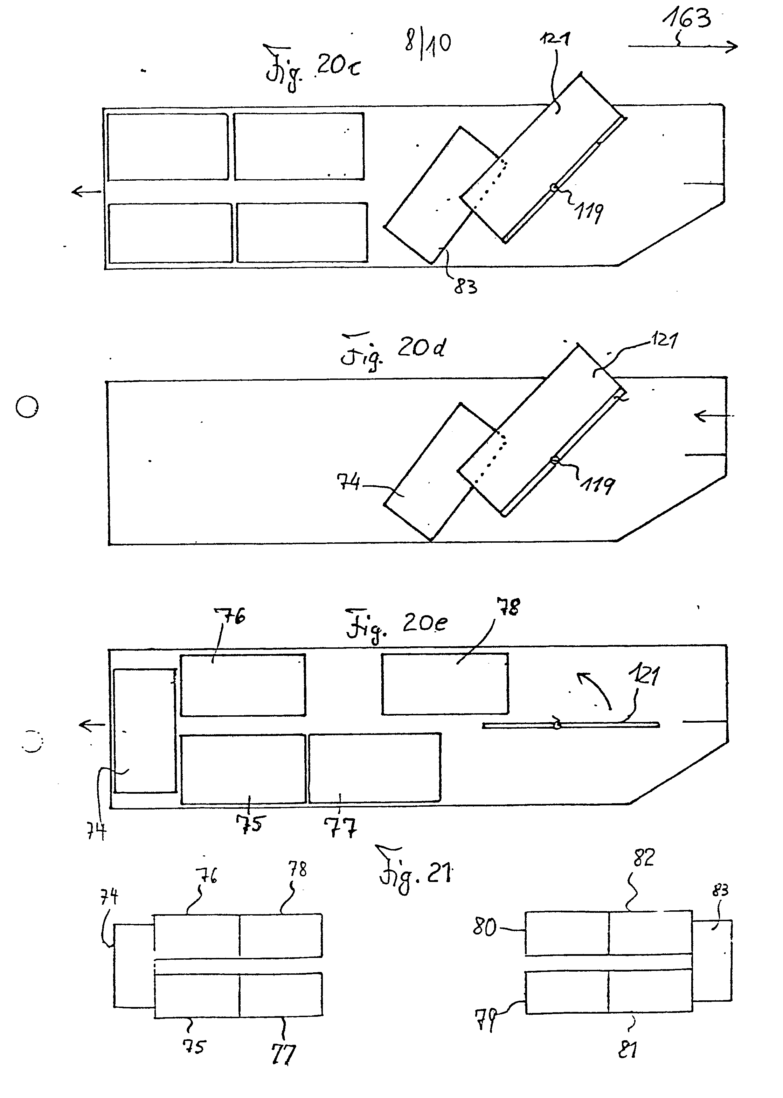

Fig. 21   eine schematische Darstellung auf
          dem Feld abgelegter Ballenlagen,

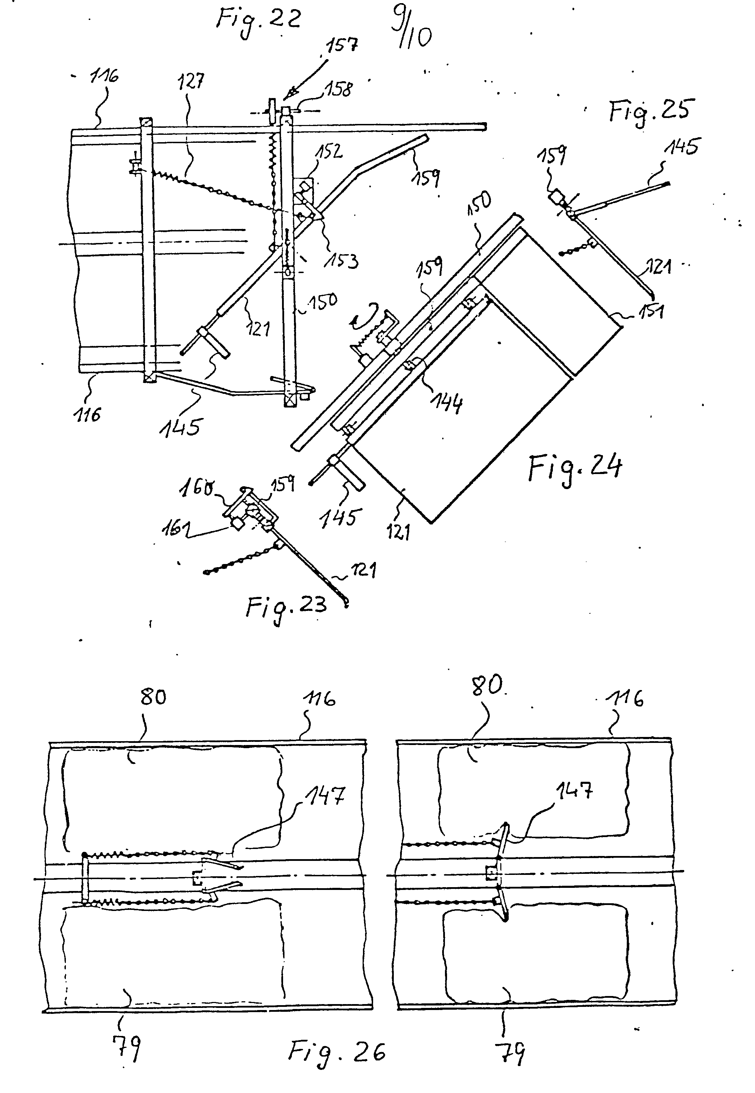

Fig. 22   eine Draufsicht auf den in Fahrtrichtung vorderen Teil des Gerätes
          gemäß den Figuren 7 und 8 in alternativer Ausführungsform zu Fig. 19,

Fig. 23   eine Einzelheit gemäß Figur 22 in
          der Stirnansicht,

Fig. 24   eine Draufsicht auf eine Einzelheit
          der Ausführung gemäß Figur 22,

Fig. 25   eine weitere Einzelheit der Ausführungsform gemäß Figur 22,

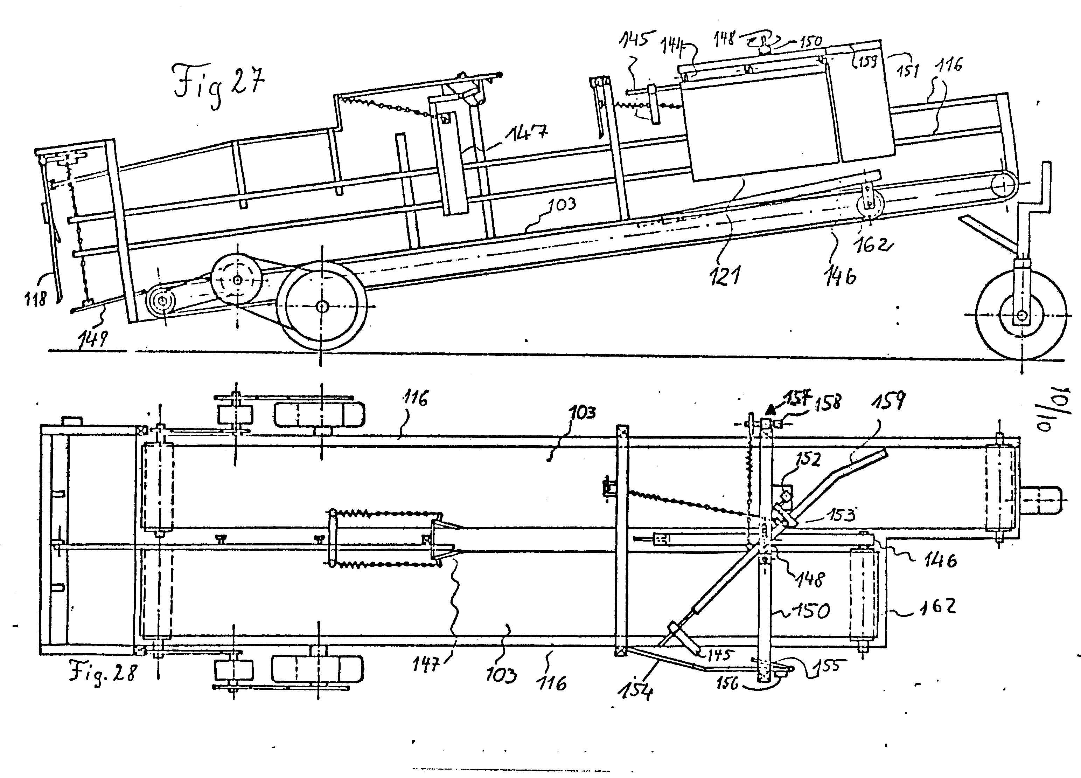

Fig. 26   eine Sperreinrichtung zum vorübergehenden Festklemmen eines Teils der
          gesammelten Schicht zwischen den
          Leitschienen,

Fig. 27   eine weitere Ausführungsform von Leitschienen, die mit einer Ballenpresse
          koppelbar sind in Seitenansicht,

Fig. 28   eine Draufsicht auf das Gerät gemäß
          Figur 27,

- 7 -

Das Gerät besteht aus einer an den Frontladerschwingen eines Treckers anzubringenden Zange 1 und einem starr mit der Zange verbundenen Sammler 2. Die Zange 1 wird durch einen verstellbaren Zangenarm 3 und einen starren Zangenarm 4 gebildet, die an ihren hinteren Enden über ein Rechteckrohr 5 und ein darin verschiebbar angeordnetes Rohr 6 verbunden sind. An dem äußeren Rohr 5 sind vertikale Rechteckrohre 7 und 8 mit Zapfen 9 und 10 zum Einhängen in die Frontladerschwinge angeordnet. Auf dem Rohr 5 ist ein Druckzylinder 11 zur Betätigung des inneren Rohres angeordnet.

Die oberen Enden der vertikalen Tragrohre 7 und 8 sind durch ein Querrohr 12 miteinander verbunden. Sie tragen Verlängerungsstäbe 13 zur Abstützung gesammelter Ballenschichten. Die Zangenarme 3 und 4 sind gleichfalls mit nach oben weisenden Verlängerungen 14 und 15 in Form von Blechen ausgerüstet. Das Verlängerungsblech 14 endet mit
Abstand vor der Spitze des Zangenarms 8, um beim Entladen ein besseres Einfädeln des Zangenarms in den Spalt
zwischen zwei Ballenschichten zu ermöglichen.

Ein Tragarm 16 zum Halten der zum Sammler 2 gehörenden
Leitschienen und des Schwenkwinkels ist am starren Zangenarm 4 befestigt und geringfügig entgegengesetzt der
Fahrtrichtung gerichtet, so daß zwischen ihm und der
Senkrechten zur Zange ein spitzer Winkel 17 entsteht.
Sowohl die äußere 18 als auch die innere Leitschiene 19
reichen über den Tragarm 16 nach hinten hinaus, so daß
in Verbindung mit dem Schwenkwinkel 20 ein weitgehender
Momentenausgleich in Bezug auf den Tragarm erreicht ist
und dessen Befestigungspunkt an der Zange keine großen
Torsionskräfte aufzunehmen hat. Der Schwenkwinkel wird
durch Tragrohre 21 und 22 an der mittleren Leitschiene
gehalten und ist um die Achse 23 schwenkbar. Die Leitschienen 18 und 19 sind über vertikale Träger 24 am Tragarm 16 befestigt.

Der Schwenkwinkel 20 ist durch Rastelemente arretierbar.
Sie bestehen aus einem Teilringstück 25, das an seinen
Enden mit Absätzen 26 versehen ist, in welche ein pendelartig nach unten hängender (Ruhestellung), am Schwenkwinkel befestigter Rasthebel 27 greift. Das Teilringstück 25 ist um einen Drehzapfen 28 am Tragarm 16 schwenkbar gelagert.

Das vordere Ende 29 der inneren Leitschiene 19 ist hakenförmig ausgebildet und um den Drehpunkt 30 schwenkbar
angeordnet. Eine Verbindungsstange 31 dient der Durchführung der Schwenkbewegung. Eine Feder 32 sorgt für die
Rückkehr des Schwenkwinkels 20 und damit über die Verbindungsstange 31 auch für die Rückkehr des vorderen Endstückes 29 der inneren Leitschiene in die jeweilige
Ausgangslage.

Ein Abweiser 33 erstreckt sich vom vorderen Ende des
inneren Zangenarms bis zum Schwenkwinkel 20, bezogen
auf seine Ausgangslage.

Der äußere Zangenarm hat einen im wesentlichen rechteckigen Querschnitt, wobei die parallel zum Boden verlaufenden Flächen 34 und 35 gegenüber der inneren
vertikalen Rohrfläche 36 nach innen vorspringen und
somit zu einem formschlüssigen Eingriff mit den eingeklemmten Ballen führen. Auch die sich nach oben erstreckende Verlängerungsfläche 15 ist mit einem nach
innen vorspringenden Steg 37 ausgestattet.

Der starre Zangenarm 4 hat einen Querschnitt, der einer
Sägezahnausbildung ähnelt. Um dies zu erreichen, sind
Schräg nach unten weisende Flächen 38 und 39 vorgesehen,
an denen beim Absenken der Zange die Ballenaußenflächen
entlanggleiten können. Beim Anheben wird jedoch wie beim
Zangenarm 3 durch das Einpressen in die Ballenflächen
gleichfalls ein Formschluß hergestellt, der das sichere
Anheben übereinandergestapelter Ballenschichten gestattet. Das Verlängerungsblech 14 zum Halten der zweiten Ballenschicht weist ebenfalls an seinem oberen Ende
einen Steg 40 auf, dessen innere Kante über ein weiteres Gleitblech 41 mit der Fläche des Verlängerungsbleches 14 verbunden ist.

Unterhalb des starren Zangenarms 4 und des Verbindungsrohres 5 befindet sich eine aus den Stäben 42 und 43
gebildete Fangvorrichtung. Die Stäbe sind mit Holmen
44 und 45 in rechteckigen Führungsrohren 46 und 47 geführt. Die Verbindung zwischen den Holmen 44 und 45 und
den Stäben der Fangvorrichtung ist über Drehzapfen 48 und 49 drehbeweglich gestaltet. Das vordere Führungsrohr 46 ist im unteren Teil gegenüber seinem oberen
Rand erweitert, so daß der Holm 44 darin eine Kippbewegung ausführen kann.

Zum Festklemmen der Holme 44 und 45 dienen Hebel 50
und 51. Für eine Federvorspannung sorgen die Hebelfedern
52 und 53. Dadurch werden die vorderen Enden der Hebel
50 und 51 gegen die Holme 44 bzw. 45 gepreßt. Der Reibschluß verhindert das Herabrutschen der Fangvorrichtung.
Zur Freigabe der Holme dienen Druckstifte, die im gezeigten Beispiel über Elektromagnete 54 und 55 der Kraft
der Federn 52 und 53 entgegenwirken.

Mit den Bezugsziffern 56 bis 59 sind die in unterbrochener Strichführung angedeuteten Stroh- bzw. Heuballen bezeichnet.

Zum Sammeln einer aus vier Ballen bestehenden Schicht
wird zunächst ein Ballen 56 (Fig. 2) durch Vorwärtsfahrt
des Treckers in den inneren Sammelkanal geschoben. Beim
Erreichen des hinteren Endes drückt er gegen den Schwenkhebel 20 und verschwenkt diesen in die in Fig. 4 gezeigte
Stellung. Der Ballen 56 nimmt damit eine quer zur Fahrtrichtung weisende Lage ein. Anschließend werden durch
weitere Vorwärtsfahrt des Treckers die Sammelkanäle mit
in Längsrichtung liegenden Ballen 57 gefüllt. Beim Einschieben eines Ballens in den Schwenkwinkel wird der nach
unten hängende Rasthebel 27 von dem Ballen nach oben gedrückt, wodurch das Teilringstück 25 gleichfalls um den
Drehzapfen 28 nach oben ausgelenkt wird und den Hebel 27
freigibt. Der Schwenkwinkel 20 kann dadurch seine Drehung
einleiten. Sobald er seine ausgeschwenkte Endlage erreicht, rastet der Hebel 27 hinter den hinteren Absatz 26
(Fig. 7) des Teilringstücks 25 und arretiert diesen in
dieser Lage, so daß ein Zurückschwenken sicher verhindert
wird.

Sobald eine auf diese Weise gebildete Ballenschicht vervollständigt ist, kann das Gerät durch die Frontladerschwingen angehoben werden, um die Ballenschicht freizugeben. Der Rasthebel 27 fällt dabei nach unten und
drückt das Teilringstück 25 abermals nach oben, so daß
der Schwenkhebel nunmehr wieder freigegeben ist und
durch die Vorspannung der Feder 32 in seine Ausgangslage zurückschwenken kann. Dort rastet er hinter den
vorderen Absatz 26 des Teilringstücks 25 und bleibt in
dieser Lage solange arretiert, bis der Sammelvorgang
von neuen wiederholt wird.

Sobald die Ballenschicht freigegeben ist, setzt der
Trecker einige Meter rückwärts, um die Ballenschicht
mit der Zange 1 zu ergreifen. Zu diesem Zweck wird
vom Treckerfahrer die Fangeinrichtung betätigt. Durch
Lösen der Klemmhebel 50 und 51 können die Holme 44 und
45 in ihren Führungen 46 und 47 nach unten rutschen.
Die zur Fahrtrichtung geringfügig nach außen abgewinkelte
Lage der Ballenschicht erlaubt eine Verringerung des Lenkausschlages des Treckers. Durch Vorwärtsfahrt und gleichzeitiges Einschwenken nach links wird die Ballenschicht
zunächst von der Fangvorrichtung erfaßt. Sodann braucht
nur noch die Zange abgesenkt zu werden, wobei der bewegbare Zangenarm ausgefahren ist. Nach dem Absenken
kann die Ballenschicht durch das Einfahren des Zangenarms 3 nach Betätigung des hydraulischen Stellzylinders
11 erfaßt und geringfügig angehoben werden. Das Gerät ist
damit zum Sammeln der zweiten Ballenschicht bereit. Beim
Sammeln der ersten Ballenschicht wurde das vordere Ende
29 der inneren Leitschiene 19 nach vorn geschwenkt, wie
aus Fig. 9 hervorgeht. Dadurch ergibt sich eine Verlängerung der inneren Leitschiene.

Die zweite Ballenschicht wird so gebildet, wie aus
Fig. 1 zu entnehmen ist. Zunächst wird der äußere Sammelkanal mit in Fahrtrichtung liegenden Ballen 59 gefüllt. Das anschließende Füllen des inneren Sammelkanals führt zwar abermals zum Anheben des Rasthebels
27 jedoch ist der Ballen nicht mehr in der Lage, den
Schwenkwinkel 20 zu drehen. Abschließend wird ein Ballen
58 quer vor die vier längsgerichteten Ballen 59 geschoben. Zu diesem Zweck wird der ebenfalls ursprünglich
in Fahrtrichtung liegende Ballen 58 mit dem Ende der
äußeren Leitschiene 18 außermittig angefahren und dadurch quer verschwenkt. Nach dem Bilden der zweiten
Schicht wird das Gerät abermals angehoben und zwar soweit, bis sich die untere Fläche der ersten, in der
Zange 1 befindlichen Ballenschicht geringfügig oberhalb
der Oberseite der zweiten Ballenschicht befindet. Das
Fahrzeug setzt abermals zurück, die Fangvorrichtung
wird freigegeben und anschließend die zuerst gesammelte
Schicht auf die zweite Schicht gesetzt. Nach dem Absetzen wird die Zange geöffnet und soweit abgesenkt,
bis die untere zuletzt gesammelte Schicht erfaßt und
zusammen mit der oberen Schicht zur Fortsetzung weiterer Sammelarbeit geringfügig über dem Boden schwebend
angehoben werden kann. Alle weiteren Schichten werden
in der vorbeschriebenen Weise gebildet.

Beim Bilden einer Ballenschicht mit einem quer zur
Fahrtrichtung liegenden Ballen 58 am in Fahrtrichtung
weisenden Ende bleibt das vordere Ende 29 der Leitschiene 19 nach oben geschwenkt. Da das Ende 29 hakenförmig
ausgebildet ist, greift es über den Ballen 58 und hindert diesen bei Vorwärtsfahrt am Abrollen auf dem Boden.
Es hat sich gezeigt, daß bereits geringfügige Vorwärtsbewegungen dazu führen, daß quer zur Fahrtrichtung
liegende Ballen mit dem Abrollen auf dem Boden beginnen.
Eine Verkantung dieser Ballen aber ist nicht gewünscht.

Durch eine lösbare Befestigung und Bestückung mit Rädern
ist die Möglichkeit gegeben, den Sammler 1 getrennt von
der Zange 1 zum Einsatz zu bringen. Für diesen Fall
ist ein Arm des Schwenkwinkels 20 mittels geeigneter
Elemente, beispielsweise Scharniergelenke mit Arretierungseinrichtung, hochklappbar gestaltet, um während
der Fahrt ohne Anheben des Sammlers die gesammelte
Ballenschicht freizugeben. Zweckmäßig wäre die Anordnung
des separaten Sammlers hinter einer Ballenpresse. Die auf
solche Art gebildeten Ballerschichten können anschließend
von einem mit der getrennten Zange 1 bestückten Trecker
zur Bildung von Verbundstapeln aufgenommen werden. Aus
Gründen der Übersichtlichkeit der Zeichnung wird auf
die Darstellung der an sich bekannten, einfachen Hilfsmittel, wie Gelenke, Stützräder u.dgl. verzichtet.

Die Ausführungsform der Leitschienen zum Ankoppeln an
eine Ballenpresse ist mit Rädern 60, 61 und 62 versehen.
Die Leitschienen sind mit 63, 64 und 65 gekennzeichnet.
Die Leitschiene 63 ist zwischen den Leitschienen 64 und
65 angeordnet. Die Leitschiene 64, in Fahrtrichtung gesehen links von der mittleren, ist bis zum in Fahrtrichtung vorderen Ende, das als Aufnahmetrichter 66 gebildet
ist, gerade durchgezogen. Der Aufnahmetrichter 66 befindet sich somit in gerader Linienführung vor dem in
Fahrtrichtung links gelegenen Sammelraum. Die Verbindung
zwischen der Leitschiene 65 und dem Aufnahmetrichter 66
wird durch ein entsprechend gebogenes Zwischenstück 67
hergestellt. Die Fahrtrichtung ist durch den Pfeil 68 gekennzeichnet,

Das vordere Ende des Gerätes ist mit einer aus zwei Teilen
69 und 70 bestehenden Ballenschurre ausgerüstet, auf welcher die von der Ballenpresse aufgenommenen Ballen in das hintere Ende des Gerätes gleiten. An der mittleren Leitschiene 63 sind um einen Drehpunkt 71 schwenkbare Führungsstäbe 72 angebracht. Am hinteren Ende des Gerätes
befindet sich ein aus Einzelstäben zusammengesetzter
Schwenkwinkel 73.

Zu Beginn eines Arbeitsvorganges gelangt einer der Ballen
74 bis 83 über die Schurre 69, 70 zu den Ballenführungsstäben 72, welche durch eine Zugfeder 84 in ihrer Stellung
gemäß den Figuren 10 und 11 gehalten werden.

Der Ballen drückt die Ballenleitstäbe um ihren Drehpunkt
71 in Pfeilrichtung 85 und gelangt so in den in Fahrtrichtung rechts gelegenen Sammelraum des Gerätes und in
den an seinem Ende befindlichen Schwenkwinkel 73. Der
Ballen löst über einen Hebel 86 (Figur 11, 13) eine
Arretierung 87 und bewirkt damit ein Querverschwenken des
gesamten Schwenkwinkels 73. Die Arretierung ist in Form
eines durch Schwerkraft betätigten Bügels ausgeführt, der
durch den Hebel 86 nach oben gedrückt werden kann und somit ausrastet. Der Ballen wird durch den Schwenkwinkel 73
im Verlauf seiner Drehung um den Drehpunkt 88 um 90$^\circ$ verschwenkt und dadurch in eine Position quer zur Fahrtrichtung gebracht.

Der nun vom Ballen in waagerechter Stellung gehaltene Hebel 86 bewirkt in Verbindung mit der Arretierung 87 eine
stabile Position des Schwenkwinkels gemäß den Figuren 13
und 14.

Beim Vorgang des Ballenverschwenkens durch den Schwenkwinkel 73 wird eine Druckplatte 89, die federbelastet ist,
zunehmend gegen die in Fahrtrichtung vordere Flanke des verschwenkten Ballens gedrückt und verhindert dadurch
ein etwa durch den Widerstand am Erdboden mögliches Umwälzen des Ballens.

Nach dem Einfädeln und Umschwenken des Ballens 74 wird
der Ballen 75 durch die Führungsstäbe 72 in den rechten
Kanal des Gerätes geführt, worauf wie beim Ballen 74 die
Führungsstäbe mit Hilfe der Zugfeder 84 um ihren Drehpunkt
wieder in ihre ursprüngliche Stellung geführt werden.

Der Ballen 75 gelangt bis zu der in Fahrtrichtung rechten
Flanke des Ballens 74 und verbleibt in dieser Stellung
(Figur 13). Der Ballen 77 wird in gleicher Weise eingefädelt, bis er gegen den Ballen 75 stößt, wobei die Führungsstäbe 72 nun nicht mehr in ihre Ausgangslage zurückkehren können, sondern durch den zuletzt eingefädelten
Ballen in einer Stellung gemäß Figur 13 gehalten werden.
Dadurch wird der rechte Sammelraum geschlossen. Dadurch
gelangen die beiden Ballen 76 und 78 in den linken Sammelraum des Gerätes. Vor dem Erreichen der Endlage des Ballens 76 wird ein an der mittleren Leitschiene 63 befestigter Hebel 90 in Pfeilrichtung 91 verschwenkt. Der Hebel
zieht über ein Zugseil 92 einen weiteren Hebel 93 in den
Bereich des linken Sammelraumes (Figur 13).

Der Ballen 78 löst über den Hebel 93 in Verbindung mit
einem Zugseil 94 eine Arretierung 95 (Figur 14) und löst
dadurch unter dem Druck der Ballenlage ein Aufklappen der
Klappe 96 in Richtung des Pfeiles 97 aus. Der Drehpunkt
der Klappe 96 ist mit 98 bezeichnet. Durch die weitere
Vorwärtsfahrt des gesamten Gerätes verläßt die fertiggestellte Ballenschicht nach hinten das Gerät. Dabei werden
die Führungsstäbe 72 sowie die Hebel 90 und 93 durch Federn in ihre Ausgangsstellungen zurückgezogen. Mit 99 ist ein
Pfeil zur Darstellung der Schwenkrichtung des Hebels 15
bezeichnet.

Gleichzeitig fällt der Hebel 86 aus seiner waagerechten
Stellung und löst dadurch die Arretierung 87, worauf der
Schwenkwinkel 73 entgegengesetzt der Pfeilrichtung 100
in seine Ausgangsstellung gemäß Figur 10 zurückkehrt.

Der Hebel 86 hält in nunmehr erreichter Vertikalstellung
die Arretierung 87, wie insbesondere aus der Figur 10A
zu entnehmen ist. Dieser Arbeitsvorgang wiederholt sich
fortlaufend ohne Verlangsamung oder Unterbrechung der
Fahrt des gesamten Gerätes.

Bei dem Ausführungsbeispiel der Erfindung gemäß den Figuren
10 bis 14 werden die den Preßkanal der vorgespannten Ballenpresse verlassenden Ballen zunächst auf den Schurrenteilen 69 und 70 geführt, bis sie den untersten Punkt 101
der Schurre erreicht haben, um von da an auf dem Boden
schiebend geführt zu werden.

Bei den Alternativausführungen gemäß den Figuren 15 und
16 ist das Gerät mit einer Bodenplatte 102 ausgerüstet,
auf welcher sich Flachriemen 103 befinden, die auf Riemenscheiben 104 und 105 geführt sind. Die Riemenscheiben 105
werden von Zahnrädern 106 angetrieben, welche formschlüssig mit Zahnrädern 107 kämmen, die ihrerseits auf einer
Welle 108 von den Geräterädern 61 und 62 angetrieben werden. Neben der Riemenscheibe des in Fahrtrichtung rechts
befindlichen Flachriemens 103 befindet sich eine Walze 109,
die mit einer schneckenartig ausgebildeten Oberfläche versehen und antriebsmäßig mit der benachbarten Riemenscheibe 104 verbunden ist.

Die Arbeitsweise der Ausführung gemäß den Figuren 15
und 16 entspricht der der Ausführung nach den Figuren
10 bis 14 mit dem Unterschied, daß die mit Vortrieb
ständig angetriebenen Flachriemen den Transport der
Ballen innerhalb des Gerätes übernehmen und somit den
Bodenkontakt derselben mit entsprechender Verschmutzungsgefahr für das Erntegut vermeiden.

Nach den Figuren 17 und 18 ist das Gerät am Ende zusätzlich mit Walzen 110 und mit einem rechts neben der Bodenplatte 102 angeordneten Flachriemen 111 versehen. Die
Förderrichtung des Flachriemens 111 ist im wesentlichen
entgegengesetzt der Fahrtrichtung gerichtet und die Förderebene verläuft vertikal. Die Riemenscheiben sind mit
112 bezeichnet. Sie bewegen sich in Richtung des Pfeiles
113. Angetrieben wird die Riemenscheibe 112 durch eine
Welle 114.

Die Walzen 110 werden über eine Welle 114 in Verbindung
mit Keilriemen 115 angetrieben.

Der Innenraum des Gerätes nach den Figuren 17 und 18 wird
seitlich durch Leitstäbe 116 begrenzt. Oberhalb des Sammelraumes verläuft eine Mittelstrebe 117, an der eine
Heckklappe 118 befestigt ist. Am vorderen Ende der Mittelsträbe 117 befindet sich an einem Drehpunkt 119 eine
Strebe 120, an der ein Ballenleitblech 121 beweglich angebracht ist. Über dem in Fahrtrichtung linken Teil des
Sammelraumes befindet sich ein Sechs-Takt-Zählwerk 122.

Zu Beginn eines Arbeitsvorganges gelangt ein Ballen 74
in Pfeilrichtung 121 (Figuren 20A bis 20E) in das Gerät
und wird von dem Leitblech 121 in eine Schrägstellung
gebracht.

Unterstützt von dem Riemen 111 drückt er gegen die Spannung der Feder 123 (Figur 19) das Leitblech 121 in
Fahrtrichtung 124. Dabei gelangt das Leitblech in die
Stellung gemäß Figur 20B und wird durch die Feder 123
in dieser Stellung gehalten.

Der an der Bodenplatte 102 des Fahrgestells laufende
Flachriemen 103 transportiert den Ballen 79 bis in die
Stellung gemäß Figur 20B. Der Ballen 80 wird von dem
Flachriemen am Ballenleitblech 121 vorbeigeführt und betätigt dabei den Zählwerkhebel 125, wodurch das Zählwerk
122 um eine Position weitergerückt wird. Der Ballen 76
holt über den Hebel 126 in Verbindung mit dem Zugseil
das Ballenleitblech 121 in seine Schrägstellung gemäß
Figur 20A zurück.

Der Ballen 81 vollzieht die gleichen Bewegungsabläufe
wie der Ballen 79, bis er die Position gemäß Figur 20C
erreicht hat. Der Ballen 82 gleitet wie der Ballen 81 am
Leitblech 121 vorbei und bewirkt wie zuvor der Ballen 80
ein Weiterrücken des Zählwerks um eine Position.

In dieser Position des Zählwerks wird über die Welle 128
(Figur 19) eine Nocke bewegt, die über einen Schalter, der
einen Stromkreis einschaltet, einen Elektromagneten 129
mit Strom versorgt. Der Elektromagnet bewegt einen Dorn
130 in Pfeilrichtung 131. Gleichzeitig wird ein Stromkreis zu einem weiteren Elektromagneten 132 geschlossen.

Der Ballen 82 holt anschließend über den Hebel 126 das
Ballenleitblech 121 in seine Ausgangsstellung zurück,
und der ausgeschobene Dorn 130 wird durch einen federbelasteten Klinkhaken 133 arretiert (Figur 19). Dadurch
wird der Ballen 83 in Folge des in seiner Drehrichtung
arretierten Ballenleitbleches 121 in eine Schrägstellung
gebracht und betätigt dabei den Hebel 134 (Figuren 19A
und 19B), der in Pfeilrichtung 135 ausschwenkt und über
einen elektrischen Schalter den Elektromagneten 132 mit
Strom versorgt. Dieser drückt dabei einen Dorn in Pfeilrichtung 136 gegen einen Klinkhaken 137 und löst damit
eine Arretierung, so daß das Ballenleitblech 121 in Pfeirichtung 138 ausschwenken kann.

Der Ballen 83 wird unter Beibehaltung seiner Schräglage
unter dem abgeklappten Ballenleitblech 121 gemäß Figur
20C hindurchgeführt. Dabei dreht er durch Berührung des
Zählwerkhebels 125 das Zählwerk 122 um eine Position
weiter un betätigt einen Elektromagneten 139 am Ende des
Gerätes (Figur 18), der in Pfeilrichtung 140 die Arretierung 141 löst, worauf die Heckklappe 118 durch den
Druck der  Ballenlage geöffnet wird, die nunmehr das Gerät verläßt. Der Kontakt des Ballens 83 mit dem Hebel 126
bleibt ohne Wirkung, da das Ballenleitblech 121 bereits
in seiner Position verharrt.

Die endgültige Querlage des Ballens 83 vor dem bereits
in dem Sammelraum liegenden längs zur Fahrtrichtung angeordneten Ballen wird durch den ständigen Vortrieb der
Flachriemen 103 gegenüber der Erdgeschwindigkeit und der
höheren Umdrehungszahl in diesem Fall des linken der beiden Flachriemen gegenüber dem rechten. Durch den ständigen
Vortrieb der Flachriemen gegenüber der Erdgeschwindigkeit wird beim Entleeren des Gerätes dafür gesorgt, daß die gesammelte Schicht nicht auseinandergezogen wird, sondern zusammengeschoben bleibt.

Nach vollzogener Entleerung des Gerätes fällt die Heckklappe in ihre ursprüngliche Stellung zurück und wird von der Arretierung 141 in dieser Lage gehalten. Gleichermaßen gesteuert wie zuvor der Ballen 80 erreicht der Ballen 74 in Schräglage gemäß den Figuren 20D den Zählwerkshebel 125 und rückt dadurch das Zählwerk 122 um eine Position weiter. Hierbei bewirkt eine Nocke 142, daß über den Elektromagneten 129 der Dorn 130 in Pfeilrichtung 143 aus dem Klinkhaken 133 gezogen wird, wobei gleichzeitig der Stromkreis zum Magneten 132 unterbrochen wird.

Durch die Riemen 103 wird der Ballen 74 bis an die Heckklappe geführt und in der Querlage gemäß der Figur 20C gegen diese gedrückt. Der Ballen 75 legt den entsprechenden Weg der Ballen 79 und 81 zurück. Der Weg des Ballens 76 entspricht dem des Ballens 80 mit den entsprechenden Betätigungen des Zählwerks. Der Ballen 77 gelangt wie der Ballen 75 in seine Position gemäß Figur 20E. Der Ballen 78 wird wie der Ballen 76 geführt und rückt das Zählwerk 122 um eine Position weiter, wobei der Nocken 142 über eine Schaltung wie zuvor durch den Ballen 83 den Elektromagneten 139 mit Strom versorgt und dieser in Pfeilrichtung 140 die Arretierung 141 löst, womit durch den Druck der Ballenlage die Heckklappe 118 geöffnet wird.

Durch den Vortrieb der Riemen gegenüber der Erdgeschwindigkeit erreicht der Ballen 78 seine Lage zu den längs liegenden Ballen im Sammelraum. Dieser Arbeitsgang wiederholt sich dergestalt, daß laufendend automatisch spiegelbildlich einander zugeordnete Schichten in gleichmäßigem Abstand voneinander auf der Fläche abgelegt werden, wodurch gewährleistet wird, daß bei einem späteren Aufnehmen und Stapeln der Schichten bzw. Ballenlagen automatisch der gewünschte Verbund zwischen den einzelnen Schichten entsteht.(Fig. 21).

Durch eine entsprechende Anordnung der Schaltung des Zählwerkes bzw. der Nocken kann jede beliebige Form der Ballengruppierung gewählt werden. Die in den Zeichnungen dargestellte Art der Ballenschichten dient lediglich als Beispiel der verschiedenen Möglichkeiten.

Bei der Ausführungsform gemäß den Figuren 22 - 28 ist am eingangseitigen Ende des Sammelraumes oberhalb der Flachriemen 103 an einem Portalstab 150 das Ballenleitblech 121 zusammen mit einen vom Ballenleitblech getrennten Führungsblech 151 aufgehängt. Als Verbindungsteil für das Ballenleitblech 121 mit dem Führungsblech 151 dient ein Tragholm 159, der dafür sorgt, daß diese beiden Teile um eine Vertikalachse 148 schwenkbar sind. Unterhalb des Tragholms 159 befinden sich horizontal gerichtete Drehpunkte 144, die es dem Ballenleitblech 121 ermöglichen,um eine Horizontalachse unabhängig vom Führungsblech 151 zu schwenken.

In der Draufsicht gemäß Fig. 22 ist zu erkennen, daß der Tragholm 159 über eine Klinke 153 arretierbar ist. Eine weitere Arretierklinke 160 sorgt dafür, daß die vertikale Lage des Ballenleitblechs 121 festgelegt werden kann. Durch Elektromagnete 152 bzw. 161 können die Klinken 153 bzw. 160 gelöst werden.

An der im Bezug auf die Fahrtrichtung hinteren Kante des Ballenleitblechs ist ein Sperrstab 145 angeordnet, der bei Ruhelage des Ballenleitblechs mit der Vertikalen einen einstellbaren Winkel bildet, so daß der Stab bei um die Horizontalachse geschwenktem Ballenleitblech lotrecht nach unten gerichtet ist und dafür sorgt, daß ein von der Presse übernommener Ballen nicht in der Lage ist, auf dem in Fahrtrichtung gesehenen rechten Flachriemen 103 weiter transportiert werden kann. Dies gilt dann, wenn das Ballenleitblech 121     nach dem Lösen der Sperrklinke 160 nach oben geschwenkt ist. In Verbindung mit der Wirkung des linken Flachriemens 103 und eines Vorschubelementes 146 wird der Ballen dann in eine Querlage zur Fahrtrichtung gezwungen. Das Vorschubelement 146 ist in dem gezeigten Beispiel als exentrisch angetriebene Vorschubstange ausgebildet. Die exentrische Aufhängung für den Antrieb befindet sich an der vorderen Umlenkrolle 162 des rechten Flachriemens 103.

An der in Fahrtrichtung gesehen   linken Seite des Gerätes befindet sich in Höhe des Portalstabes 150 ein Zählschaltwerk 157 von dem eine Nockenwelle 158 ausgeht, auf der zwei nicht dargestellte Nocken angeordnet sind. Einer dieser Nocken dient dem Umschalten der Stromkreise für die beiden Elektromagneten 152 und 161 am Ballenleitblech. Der zweite Nocken dient der Betätigung eines Elektromagneten zum Entriegeln der Heckklappe 118.     An einem Leitstab 154 ist ein Kontakthebel 155 zum Betätigen eines elektrischen Schalters 156 angeordnet. Der Hebel 155 wird von jedem Ballen betätigt, der entweder den rechten der beiden Flachriemen 103 berührt, von diesen weitertransportiert oder anschließend in eine Querlage gezwungen wird. Der elektrische Schalter 156 dient zum Betätigen der Elektromagnete, welche die Arretierungen des Ballenleitbleches lösen, damit dieses entweder um seine horizontale Achse oder seine vertikale Achse geschwenkt werden kann.

Am hinteren Ende des Gerätes gemäß Fig. 27 und 28 befindet sich ein Bodenendblech, das beim Ablegen der gesammelten Schichten nach unten auf den Boden klappt und die Höhendifferenz zum Ackerboden überbrückt. In der Mitte des Sammelraumes ist das Gerät zusätzlich mit Spreizblechen 147 ausgerüstet, die sich mit ihren Kanten beim Spreizen in die Ballen 49 und 80 pressen, um beim Ablegen der Schichten einen genügenden Zwischenraum zwischen den Ballen 74 bis 78 und 79 bis 83 zu ermöglichen (Fig. 21). Die Spreizelemente sind über geeignete Zugmittel mit der Heckklappe 118 verbunden, so daß beim Öffnen der Heckklappe die Spreizmittel in die genannten Ballen greifen.

Die Fahrtrichtung des Gerätes ist bei allen Darstellungen mit 163 bezeichnet, während die Förderrichtung der Flachriemen 103 mit 164 bezeichnet ist.

- Patentansprüche -

- 1 -

PATENTANSPRÜCHE

1. Gerät zum Sammeln, Verbundstapeln, Transportieren und Verladen der von einer fahrbaren Presse auf einem Feld abgelegten, etwa quaderförmigen Ballen aus Stroh, Heu und dergleichen, gekennzeichnet durch eine gabelartige, an den Frontladerschwingen eines Treckers befestigbaren Zange (1) mit in Fahrtrichtung weisenden, querverstellbaren Armen (3, 4) und Leitschienen (18, 19, 63, 64, 65) zur Bildung von zwei Sammelräumen mit Mitteln zum Bilden stapelbarer Schichten aus wenigstens zwei in Fahrtrichtung längs nebeneinander und zum Verschwenken mindestens eines der eine Schicht bildenden Ballen quer zur Fahrtrichtung vor und/oder hinter den längs zur Fahrtrichtung nebeneinander liegenden Ballen.

2. Gerät nach Anspruch 1, dadurch gekennzeichnet, daß die Leitschienen (63, 64, 65) mit den Mitteln zum Bilden der stapelbaren Ballenschichten mit der Ballenpresse kuppelbar sind.

3. Gerät nach Anspruch 1, dadurch gekennzeichnet, daß die Leitschienen (18, 19) mit den Mitteln zum Bilden der stapelbaren Ballenschichten mit den Zangenarmen (3, 4) verbindbar sind.

4. Gerät nach Anspruch 1, dadurch gekennzeichnet, daß am hinteren Ende der Sammelräume bzw. der Leitschienen (18, 19, 63, 64, 65) ein um eine Vertikalachse schwenkbarer Winkel (20, 73) angeordnet ist.

5.   Gerät nach Anspruch 2, dadurch gekennzeichnet, daß
die Leitschienen (63, 64, 65) mit den Mitteln zum Bilden
der stapelbaren Ballenschichten auf einer Bodenplatte
(102) angeordnet sind, wobei die Bodenplatte mit einer
schräg entgegengesetzt zur Fahrtrichtung abfallenden Neigung versehen ist.

6.   Gerät nach einem der Ansprüche 1 - 5, dadurch gekennzeichnet, daß als Schwenkvorrichtung im vorderen Teil
des Sammelraumes eine um eine vertikale und zusätzlich
um eine horizontale Achse (119, 144) schwenkbare Platte
(121) vorgesehen ist.

7.   Gerät nach einem oder mehreren der Ansprüche 1 - 6,
dadurch gekennzeichnet, daß die Schwenkvorrichtungen mit
Hilfe von durch Ballen betätigbaren Hebelelemente steuerbar sind.

8.   Gerät nach Anspruch 5, dadurch gekennzeichnet, daß
die Bodenplatte (102) mit wenigstens
    einem   bandförmigen Förderelement  (103) ausgerüstet ist, dessen entgegen der Fahrtrichtung gerichtete
Fördergeschwindigkeit größer ist als die Fahrgeschwindigkeit des Gerätes.

9.   Gerät nach einem der Ansprüche 1, 2, 4, 5, 6 - 8,
dadurch gekennzeichnet, daß zum Ein- und Ausschalten von
Stellmagneten ein von Ballen betätigbares Schalt- und
Zählwerk (122) dient.

10. Gerät nach Anspruch 6, dadurch gekennzeichnet, daß
zwischen den bandförmigen Förderelementen (103) im Bereich des schwenkbaren Ballenleitblechs (121) ein der

Unterstützung des Vorschubs der von dem Ballenleitblech
verschwenkten Ballen dienendes Vorschubelement (146)
angeordnet ist.

11. Gerät nach einem der Ansprüche 1, 2, 4 - 10, dadurch gekennzeichnet, daß an der hinteren Kante des Ballenleitbleches (121) ein Sperrstab (145) derart angeordnet ist, daß dieser bei um die Horizontalachse geschwenktem Ballenleitblech (121) eine lotrechte Sperrlage einnimmt.

12. Gerät nach einem oder mehreren der Ansprüche 1 -11,
dadurch gekennzeichnet, daß die Zange mit einem starren
Arm (4) versehen ist, der einen annähernd sägezahnartigen
Querschnitt aufweist.

13. Gerät nach einem oder mehreren der Ansprüche 1 -12,
dadurch gekennzeichnet, daß wenigstens der starre Zangenarm (4) mit einer nach oben weisenden Haltefläche
(14) versehen ist, an der im Bereich der zweiten Schicht
von unten ein nach innen weisender Steg (40) befestigt
ist.

14. Gerät nach einem oder mehreren der Ansprüche 1-13,
dadurch gekennzeichnet, daß genau unterhalb des inneren
Zangenarmes (4) und eines die beiden Zangenarme verbindenden Verbindungsrohres (5) eine Fangvorrichtung für
die in den Sammelkanälen gebildete Ballenschicht angeordnet ist, wobei die Fangvorrichtung aus zwei rechtwinklig mit-einander verbundenen Stegen (42, 43) besteht,
welche über vertikale Holme (44, 45) höhenverstellbar
an der Zange geführt sind.

- 4 -

15.    Gerät nach Anspruch 14, dadurch gekennzeichnet, daß
die Holme durch federbelastete Klemmhebel (50, 51) ständig in ihrer jeweiligen Lage arretiert sind, wobei die
Klemmhebel durch Druckstifte gegen die Kraft der Hebelfedern (52, 53) lösbar sind.

0009541

1/10

Fig.2

Fig.1

0009541

Fig. 5
Fig. 6
Fig. 7
Fig. 8
Fig. 9
Fig 3
Fig. 4

Fig. 12

Fig. 10

Fig. 11

000 9541

3/10

Fig. 14

Fig. 13

0009541

Fig. 15

Fig. 16

110

105

163

102

103

164

104

105

103

109

164

104

106 107

102

114

115 115 114

62

111 112 113

Fig.17

141

140

137

118

110

Fig.18a

122

117

127

119

120

121

116

125

126

111

116

69

102

102

Fig.18

7/10

**Fig. 19**

**Fig. 19a**

**Fig. 19c**

Fig. 20a

**Fig. 20b**

0009541

163

Fig. 20c

121

119

83

Fig. 20d

121

119

74

Fig. 20e

76

78

121

74

75

77

Fig. 21

76

78

82

83

74

80

79

75

77

81

Fig.22

Fig.25

Fig.24

Fig.23

Fig.26

0009541

9/10

Fig 27

Fig. 28

0009541

10/10